# EUROPEAN PATENT APPLICATION

(11) **EP 0 718 650 A2**
(43) Date of publication of application: **26.06.1996**
(21) Application number: 95119753.2
(22) Date of filing: 14.12.1995
(51) Int. Cl.: G02B 6/30

(54) **system for the coupling of a multipolar optical connector with waveguides**

(30) Priority: 23.12.1994 IT MI942619
(71) Applicant: ITALTEL SOCIETA ITALIANA TELECOMUNICAZIONI s.p.a., I-20149 Milano (IT)
(72) Inventor: Chiaretti, Guido, I-20026 Novate Milanese (IT); Parafioriti, Giacomo, I-20092 Cinisello Balsamo (IT)
(74) Representative: Giustini, Delio

(57) **Abstract**

The system according to the invention includes a substrate (1) on upper side of which waveguides are deposited according to the planar geometry technology. The front side of the substrate (1) being coupled and made integral to an end of a multipolar optical connector which is internally hollow and comprising a plane surface (35).
On this surface lies, according to a preferred embodiment of the invention, optical fibre lengths (36) in such a way that the core (42) of the fibres turns out to be coaxial with respect to the axis of the waveguides (23) obtained on said substrate (1). These optical fibre lengths are constrained at the same distance and bound against said plane surface by means of a covering element (37) one portion of which is made integral to the upper side of the substrate (1).
The optical connector is preferentially set up by a cylindrical body which turns out to be inserted inside an elastic bush (84). This bush is inserted inside a body of plastic material provided with means (121) suitable to facilitate the pre-alignment of the two portions of the interconnection element to be coupled together.

## Description

### Field of the Invention

The present invention relates to a system for the coupling of a multipolar optical connector to waveguides, and particularly to the association of a multipolar optical connector to a substrate on upper side of which waveguides are deposited according to the planar geometry technology.

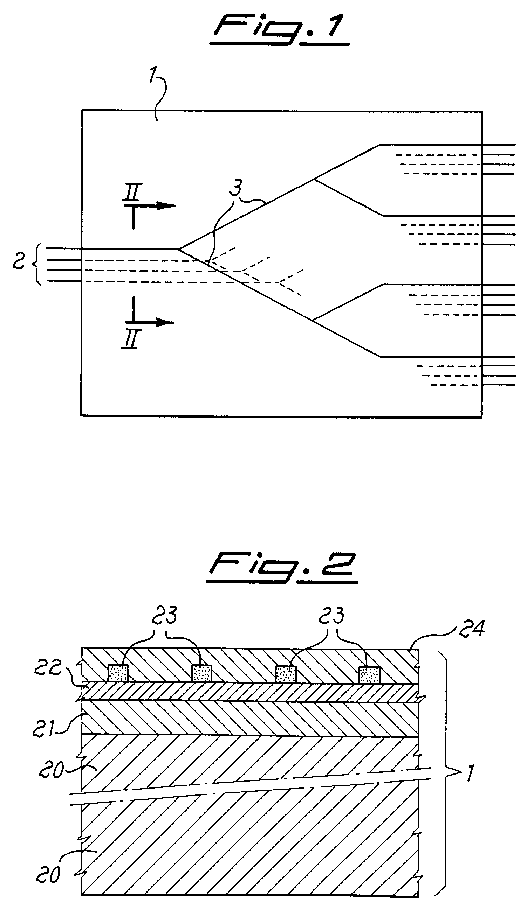

The availability of this technology made it possible to realize at low cost a multiplicity of optical components, such as for example the optical splitters. Fig. 1 shows a series of such components, and in particular it shows a substrate 1 on which are deposited in a known way a multiplicity of waveguides.

Just as an indication, four input waveguides are shown which are marked by the number 2. Each one of the guides branches then is splitted in two tracks marked in the figure by the numerical reference 3, and as a consequence, the optical signal passing through each optical input guide split up in the two tracks of the above-mentioned ramification.

Each ramification branches is further splitted in two tracks defining a further splitting up of the optical input signal.

Such ramification process may be repeated for quite high number of times, and the single branches may be grouped between them for example in a way to get the splitting up on sixteen outputs of the four optical input signals.

Fig. 2 shows a cross section carried out according to the plane II-II of figure 1 in order to point out the structure of the above-mentioned waveguides and of said substrate 1.

In particular this element is set up by a body in semiconductor material 20 (such as for example Lithium Niobate, Gallium Arseniuret, Indium Phosphorus, Silicon, etc.) on which the waveguides are realized. The realization techniques of said guides are different according to the specific semiconductor used as substrate and between such techniques are mentioned the techniques for deposit, for growth, for propagation.

As a not limiting example is hereafter described the deposition technique on Silicon. According to this technique, on such substrate a first layer of glass 21 having an isolation function and afterwards on such layer 21 a second layer 22 is deposited which makes up the lower cladding of the waveguides.

On this glass layer 22 a layer of dielectric material is deposited presenting a higher refraction index compared to the refraction index presented by layer 22, and afterwards this layer 23 undergoes a photolitographic procedure through which it turns out to be possible to define the geometry of the waveguides. this photolitographic procedure makes it thus possible to "attack" the portions of the layer of dielectric material 23 which do not set up the real waveguides, making it thus possible to get waveguides presenting a predetermined geometry.

The waveguides 23 are then covered by a further glass layer 24 with a refraction index setting up the upper cladding of the guides.

In the modern telecommunication systems is required to couple the above-mentioned optical waveguides to optical fiber, in order for example to connect the optical splitters to devices connected upstream and/or downstream of said components.

### Background Art

US 4.639.074 discloses a self-aligning fibre-waveguides coupler including:
- a first substrate containing optical guides put longitudinally in its upper side;
- a second substrate which comprises a plurality of longitudinal grooves each one of which is shaped in such a way to receive a respective optical fibre;
- a covering element, this one also comprises a plurality of longitudinal grooves lying on the first as well as on the second substrate.

Said self-alignment coupler, due to the presence of said elements, is suitable to align five of the six degrees of freedom of the fibre-waveguides alignment process.

In other words the use of the coupler described in this patent involves the settlement of a further degree of freedom achievable for example in an active way by transferring laterally the set made up by said second substrate and by said covering element and monitoring and maximizing the intensity of the optical signals transiting from the fibres to the optical guides.

### Object of the Invention

It is one object of the present invention to realize the coupling of a multipolar optical connector comprising the above-mentioned optical fibres (or waveguides) with waveguides put on a substrate realized as specified here-in-above.

### Disclosure of the Invention

The above mentioned object is achieved through the system realized according to claim 1.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
figure 1, already described, shows in a schematic way a substrate of semiconductor material on which a set of optical splitters has been deposited;
figure 2, already described, shows a cross section of the substrate realized according to the plane II-II of figure 1;
figure 3 shows the system for the coupling of a multipolar connector to substrate 1 of figure 2, realized according to the invention;
figure 4 shows a magnification of the particular IV of figure 3;
figure 5 shows a cross section realized according to the plane V-V of figure 4;
figure 6 shows a cross section always realized according to plan VI-VI of figure 4 in order to point out the coupling system realized according to the invention;
figure 7 shows the covering element 37 of figure 3;
figure 8 shows a cross section of the connector realized according to the plane VIII-VIII of figure 3;
figure 9 shows a cross section of the connector and of the guide means associated to this one;
figure 10 shows the coupling of a multipolar optical connector to a substrate in semiconductor material including waveguides;
figure 11 shows a second embodiment of the coupling of a multipolar optical connector including waveguides to a substrate in semiconductor material, also this one including waveguides;
figure 12 shows the same system previously illustrated with reference to figure 3, coated by bodies in plastic material suitable to facilitate the pre-alignment of the portions of the connector.

### Detailed Description of a Preferred Embodiment

Figure 3 shows substrate 1 on which the optical waveguides 23 (not shown in the figure for graphical reasons).

This substrate 1 is joint (for example through bonding) to the body of an optical connector 32 at preferably and substantially circular cross section presenting, in a concentric position compared to the axis of the connector, a substantially quadrangular opening 33 which communicates with a countersink 34, preferentially obtained through abrasion of the lateral surface of the connector body 32 with a depth suitable to communicate with said opening 33.

Corresponding to the countersink 34, the opening 33 presents a step 35 which height of which is function of the thickness of an optical fibre without the external protection.

On this step 35 are in fact placed lengths of optical fibre 36 (only one is illustrated in the figure) which turn out spaced out by a covering element 37 provided with v-shaped grooves, as will become clearer hereafter with reference to the figures from 4 to 11.

Each length of the optical fibre is in fact positioned inside a specific groove of the element 37 and, considering that such element is placed on the step 35, the lengths of fibres 36 are constrained inside of each groove and maintained in this way at the same distance.

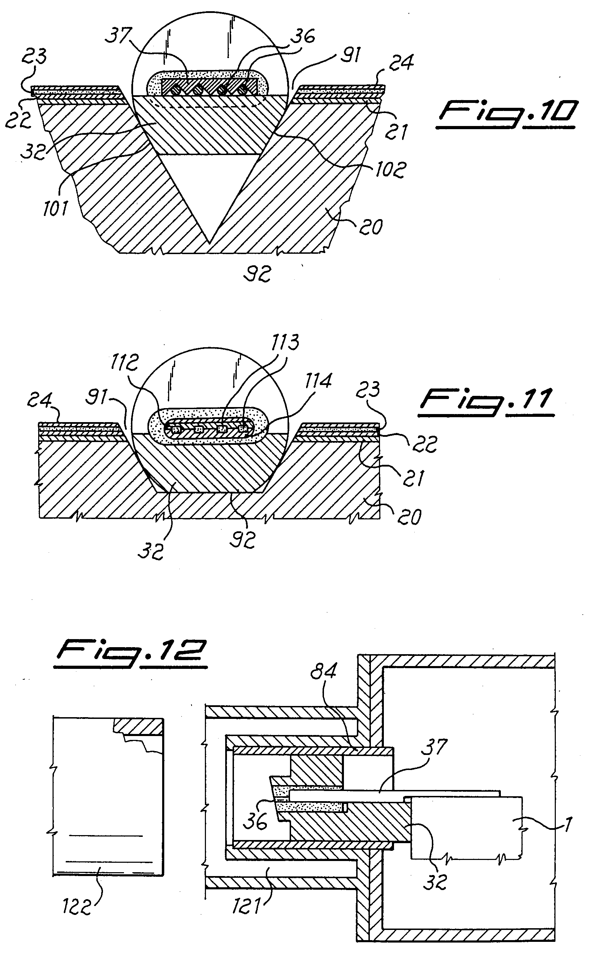

Step 35 creates a plane surface which turns out to be parallel to the plane surface set up by a recess 82 obtained on the lower side of body 32 as will become clearer hereafter with reference to figure 8.

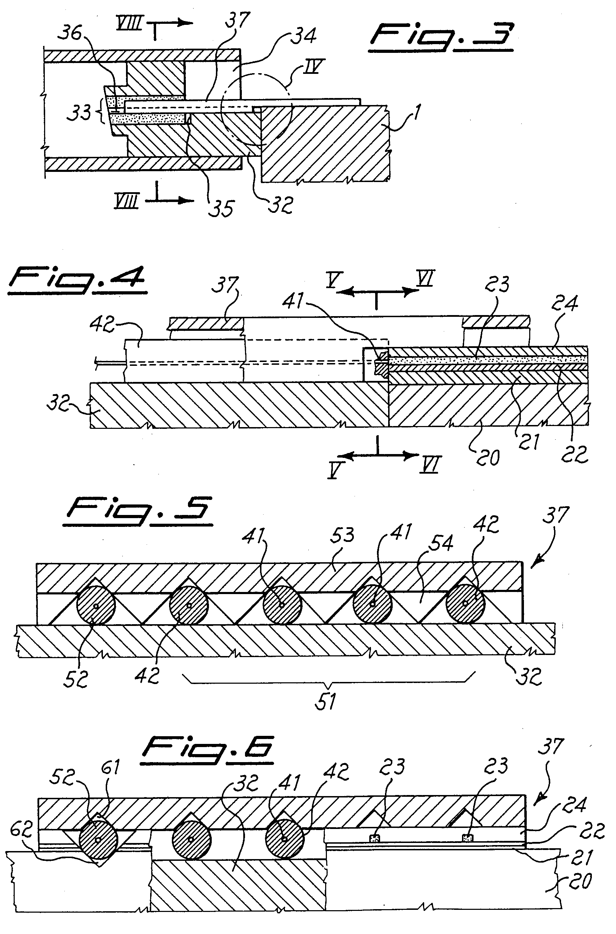

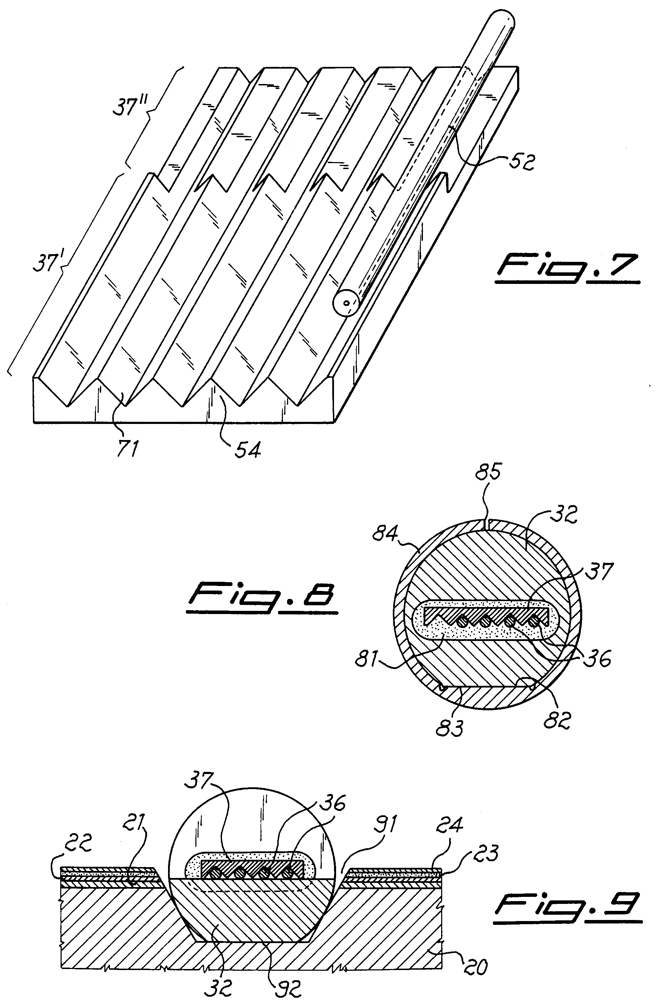

The covering element 37 shows a differentiated height as will become clearer hereafter with reference to figure 7, and the portion with minor height is put on to the upper side of substrate 1, and turns out to be fixed to this one by bonding.

Figure 4 shows in an enlarged scale the particular VI of figure 3 in order to better point out the fibre-waveguide coupling.

In fact the enlarged scale makes it possible to point out the presence of one of the waveguides 23 of figure 2 which lies on, the same plane of the core 41 of one of the fibre length (visible thanks to the fact that the cladding of fibre 42 turns out to be partially sectioned), and in particular the end of each waveguide 23 turns out to be in an axial way aligned and in touch with the core 41 of a respective optical fibre length.

Figure 5 shows a cross section realized according to plane V-V of figure 4, and the sections of four optical fibre length 36, suitable for the transmission of signals and one optical fibre length suitable to be used for the positioning of the covering element 37 and as a consequence the positioning of the fibres 36 with respect to the waveguides 23. Each length 36 is set up, as described here-in-above with reference to figure 4, by an external cladding 42 and by a core 41.

In particular the four optical fibre lengths suitable for the transmission of the optical signals are as a whole labelled as 51, while the optical fibre lengths used to define the correct positioning of the covering element 37 is labelled as 52.

Always in figure 5 are visible:
- in cross section the upper portion 53 of the covering element 37;
- in sight the full portions 54 of the covering element 37 which set up the above-mentioned V-shaped grooves which constrain the optical fibres against the plane created by step 35, putting them at the same distance and restraining them to get into a precise position.

In particular, in the central position of the figure, are illustrated two fibres marked by the numerical reference 51, which have the function to realize the transmission of the optical signals, and a fibre, marked by the numerical reference 52 which has the function to assure the correct positioning of the covering element 37. This fibre 52 (or other longitudinal element with equivalent function) turns in fact out to be positioned inside a seat set up by one (61) of the above-mentioned V-shaped grooves foreseen in the substrate of semiconductor material 20. In other words, in order to assure the correct positioning of the optical fibre lengths 51 with respect to the waveguides 23, the plate of semiconductor material 37 is laterally transferred until the fibre length 52 will be placed inside the V-shaped groove 61. When this condition is achieved, the core 41 of the optical fibres length 51 turns out automatically aligned with the waveguides 23.

In this figure 6, two of the optical fibres suitable for the transmission of optical signals as well as the portion of the base 32 have not been represented in order to make the substrate of semiconductor material 20 visible which supports the optical waveguides 23.

Without departing from the scope of the present invention, it obviously turns out to be possible to foresee the presence of more optical fibre lengths 52 in order to facilitate the correct positioning of the covering element 37, or to foresee the presence of a single optical fibre length 52 in a similar or different position with respect to that shown in figure 6.

Figure 7 shows a sight in perspective of the covering element 37, previously mentioned with reference to figure 3, heaving V-shaped grooves.

The full portions 54 of the covering element separating one groove from the adjacent groove have a differentiated height.

In particular the element 37 is set up by a first portion 37' which overlays the optical fibres, and in this portion the grooves 71 have a depth making it possible to receive the whole diameter of the optical fibre (usually 125 µm).

The element 37 comprises moreover a second portion 37'', overlaying the substrate 31, and in this portion the grooves 71 have an inferior depth and are only used to "guide" at least partially the optical fibres 41, 42 in the hollow space which is created between the end of the first portion of the covering element and the front side of the substrate.

In the preferred embodiment illustrated in the figure, four of the above-mentioned grooves are assigned to receive the optical fibre lengths suitable to be coupled to the waveguides, and the fifth V-shaped groove is assigned to receive optical fibre alignment length 52, which may also have an inferior length compared to that of the covering element 37.

Figure 8 shows a section of the connector realized according to plane VIII-VIII of figure 3 in order to point out the circular section of the connector body, which presents in its inner part a longitudinal cavity with a preferentially ellipsoidal section into which the fibre lengths 36 are introduced maintained at the same distance by the V-shaped grooves foreseen in the covering element 37.

The above-mentioned longitudinal cavity is filled up with ductile material (preferentially argentana) 81.

The body of the connector 32 is provided with a longitudinal recess 82 preferentially set up by a plane surface put on an analogue surface 83 foreseen in the internal side of a bush 84. The latter one is provided with a slot 85 and circumscribes elastically the body of the connector.

According to an alternative embodiment of the system according to the invention, the alignment in an automatic way of all degrees of freedom is achieved on the basis of the device shown in figure 9, i.e. by making a longitudinal groove 91 on the same body in semiconductor material 20 of the substrate 1. In particular, this groove represents the ground set up by a plane surface 92 which according to a preferred embodiment turns out to be parallel to the lower side of the body in semiconductor material 20 itself. Thanks to this expedient it turns out to be possible to proceed in a way that the plane surface 92 of the groove 91 will be realized with precisions inferior to the µm. The body of the connector as described before with the plane surface 82 which is in touch with the plane surface 92 is positioned inside of the groove 91. In this way, considering as specified before that it is possible to realized the above-mentioned plane surface 92 with high precision, and considering that it turns out to be possible to realize by low cost mechanic processing and with significant precision the positioning if the fibres in a way to guarantee a predetermined distance between the axis of the fibres 36 and recess 82 which is foreseen on the external side of the connector, it turns out to be possible to realized the alignment of all degrees of freedom of the fibre coupling system, waveguides, in an automatic way

Without departing from the scope of the present invention, it turns out possible to dimension groove 91 in such a way that the body of the connector 32 will get in contact only by two points of the groove, which may be for example the bottom 92 and one of the two sides.

Always without departing from the scope of the present invention, groove 91 may be V-shaped and thus turn out deprived of the plane surface 92 but with the consequence that in this case only five of the six degrees of freedom of the fibre-waveguide coupling system turn out to be aligned in an automatic way. In this case is therefore necessary to rotate the body of connector 32 until the optical fibres 36 turn out to be aligned to the waveguides 23.

In order to avoid such rotation and to align in an automatic way all degrees of freedom of the system, it turns out to be possible to reduce the dimensions of the V-shaped groove on the basis of what illustrated in figure 10 and to provide the connector body 32 with two longitudinal recesses set up by the plane surfaces 101 and 102. When these surfaces 101 and 102 get in touch with the sides of the surfaces of the groove, the automatic alignment between the waveguides and the optical fibres 36 is achieved.

Without departing from the spirit of the present invention, the connector body 32 may be provided with a single longitudinal recess which inclination is equal to the inclination of the V-shaped groove.

Always without departing from the spirit of the present invention, it turns out to be possible the set of optical fibres and the covering element 37 by a further substrate of conductor material on which surface waveguides on the basis of what illustrated with reference to figure 11 are realized.

In particular on this further substrate 111 the inferior cladding 112 is deposited, and then the waveguides 113 as well as the superior cladding 114. In this case a coupling of the waveguides 23 realized on the substrate in semiconductor material 20 to the waveguides 113 realized on substrate 111 is achieved.

Figure 12 shows the same coupling system previously illustrated with reference to figures 3-11, to which elements preferably in plastic material are associated for the coating of the real connector in order to facilitate the alignment of the connector portions here illustrated by a second connector portion 122 presenting a complementary shape.

Said bush 84 in particular turns out visible in cross section which circumscribes in an elastic way the body 32 of the connector, and which presents a length such to receive the second portion of the above-mentioned connector.

Bush 84 is constrained inside a plastic material element which also has two cavities 121 assigned to receive the same number of protruding bodies, always in plastic material, which are integral with said second portion 122 of the connector.

These protruding bodies run inside the cavities 121 and facilitate in this way the penetration of body 32 of the not shown connector inside the bush 84, and therefore the contact of the front sides of the optical fibre lengths 36 inserted inside of both connector portions turns out to be possible.

Without departing from the spirit of the present invention, the pre-alignment means of the connector may be different from those illustrated before, and they may be for example of the bayonet or screw type, etc.

While a particular embodiment of the present invention has been shown and described, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. System for the coupling of a multipolar optical connector to waveguide realized on a substrate of semiconductor material, characterized in that the front side of the substrate (1) turns out to be coupled to an end of a multipolar optical connector set up by an internally hollow body and comprising inside of this cavity a support (35) on which lies a set including means (36, 113) suitable to transport light radiations, in such way that the axis of the waveguides turns out to coincide with the axis of said means suitable to transport light radiations.

2. System according to claim 1, characterized in that said means for the transport of light radiations are set up by a plurality of optical fibre lengths (36) which are constrained against said support (35) through a first portion (37') of a covering element (37) provided with a number of grooves equal to that of the above-mentioned optical fibre lengths (36), a second portion (37'') of said covering element (37) being rendered integral with the upper side of said substrate (1).

3. System according to claim 1, characterized in that said means for the transfer of light radiations are set up by waveguides (113) deposed on a further substrate (11) of semiconductor material.

4. System according to the previous claims, characterized in that the body (32) of the above-mentioned connector has a cylindrical shape, and in that its external side presents a longitudinal recess (82) set up by a plane surface which turns out to be parallel to the above-said support (35) provided for inside of the cavities of the same connector.

5. System according to the previous claims, characterized in that on said substrate (1) a longitudinal groove (91) is made which bottom is set up by a plane surface on which said longitudinal recess (82) foreseen on the external side of the connector body (32) is positioned, the width of said longitudinal groove (91) being shaped in a way to guarantee the contact of at least two areas of the connector body (32).

6. System according to claim 6, characterized in that the longitudinal groove (91) foreseen in said substrate (1) is V-shaped.

7. System according to claims 4 and 6, characterized in that the external side of the connector includes at least one longitudinal recess set up by a plane inclined surface with an entity equal to the inclination of the V-shaped groove (91) sides.

8. System according to claim 2, characterized in that said covering element (37) includes n+1 longitudinal grooves, being n the number of optical fibre lengths (36), and in the n+1th groove an alignment body (52) being inserted which turns out to be also positioned in a recess (62) foreseen in the body of semiconductor material (20) of said substrate (1).

9. System according to claim 8, characterized in that said alignment body (52) is set up by a further optical fibre length.

10. System according to claim 8, characterized in that said covering element (37) has n+m longitudinal grooves, being m the number of the alignment bodies (52).

11. System according to claims 1 and 4, characterized in that said optical connector body (32) is inserted in an elastic way inside a bush (84) of complementary shape and having in its internal side a longitudinal guide set up by a plane surface (83).

12. System according to claims 1 and 4, characterized in that said bush (84) is coated by a body provided with means (121) suitable to facilitate the alignment of the two portions of the connector.

13. System according to claim 2, characterized in that said first portion (37') of the covering element (37) has V-shaped grooves with a depth such to contain the whole external diameter of the optical fibres.

14. System according to claim 2, characterized in that said second portion (37'') of the covering element (37) has a thickness lower than the that of the first portion (37').

15. System according to claims 2, 13 and 14, characterized in that the vertical plane, coinciding with the plane on which the thickness variation of said covering element (37) is stated, is shifted by a predetermined entity with respect to the plane coinciding with the front side of said substrate (1).
